# EUROPÄISCHE PATENTANMELDUNG

(11) **EP 1 460 297 A1**
(43) Veröffentlichungstag der Anmeldung: **22.09.2004**
(21) Anmeldenummer: 04004776.3
(22) Anmeldetag: 02.03.2004
(51) Int. Cl.: F16D 23/06, F16H 61/04

(54) **Schaltkupplung**

(30) Priorität: 19.03.2003 DE 10312867
(71) Anmelder: GETRAG Getriebe- und Zahnradfabrik Hermann Hagenmeyer GmbH & Cie KG, 74199 Untergruppenbach (DE)
(72) Erfinder: Ledetzky, Erol, 74074 Heilbronn (DE)
(74) Vertreter: Steil, Christian, Dipl.-Ing.

(57) **Zusammenfassung**

Es wird vorgeschlagen eine Schaltkupplung (10) für ein automatisiertes Stufengetriebe (G), mit dem sich Gangwechsel zumindest unter Teillast durchführen lassen, wobei die Schaltkupplung (10) generell als Sperr-Synchronisierung (10) mit einer Schaltmuffe (12), einem Kupplungskörper (18), einem Synchronring (20) und einer Reibkupplung (22) ausgebildet und dazu ausgelegt ist, die Reibkupplung (22) zumindest während eines Abschnittes eines Freiflugweges (24) der Sperr-Synchronisierung (10) zu belasten, um ein Moment übertragen und folglich einen Gang zumindest unter Teillast einlegen zu können.

Dabei ist eine Anspitzung (48) wenigstens einiger Zähne der Schaltmuffenverzahnung (40) in wenigstens zwei axiale Bereiche (50, 52) unterteilt, die unterschiedliche Anspitzwinkel (α, β) aufweisen, die jeweils größer als Null sind.

## Beschreibung

Die folgende Erfindung betrifft eine Schaltkupplung für ein automatisiertes Stufengetriebe, mit dem sich Gangwechsel zumindest unter Teillast durchführen lassen, wobei die Schaltkupplung generell als Sperr-Synchronisierung mit einer Schaltmuffe, einem Kupplungskörper, einem Synchronring und einer Reibkupplung ausgebildet und dazu ausgelegt ist, die Reibkupplung zumindest während eines Abschnittes eines Freiflugweges der Sperr-Synchronisierung zu belasten, um ein Moment übertragen und folglich einen Gang zumindest unter Teillast einlegen zu können.

Eine derartige Schaltkupplung ist bekannt aus der DE 199 30 972 C1.

Bei Getrieben für Kraftfahrzeuge unterscheidet man generell zwischen handgeschalteten und klassischen Automatikgetrieben. Seit einigen Jahren werden automatisierte Schaltgetriebe immer populärer, bei denen die Betätigung des Getriebes mittels geeigneter Aktuatoren (hydraulisch, pneumatisch oder elektromotorisch) erfolgt. Bei diesen automatisierten Schaltgetrieben wird in der Regel auch die zentrale Anfahr- und Trennkupplung automatisch betätigt. Eine zentrale Steuerung koordiniert die Aktuatoren und nimmt ggf. auf das von dem Motor (typischerweise Verbrennungsmotor) des Kraftfahrzeuges abgegebene Moment Einfluss.

Bei automatisierten Schaltgetrieben tritt genauso wie bei handgeschalteten Getrieben während Gangwechseln eine Zugkraftunterbrechung ein. Denn vor dem Auslegen eines Quellganges und dem Einlegen eines Zielganges wird die Anfahr- und Trennkupplung geöffnet, so dass von dem Motor keine Zugkraft mehr auf die Antriebsräder des Kraftfahrzeuges übertragen werden kann.

Zur Linderung dieses Problems werden diverse Ansätze verfolgt. Zum einen werden sogenannte Doppelkupplungsgetriebe wieder populär, bei denen zwei Kupplungen zwei parallele Getriebe überschneidend ansteuern, so dass keine Zugkraftunterbrechung eintritt. Eine weitere Möglichkeit besteht darin, über eine zweite Kupplung eine einzelne Gangstufe (in der Regel den höchsten Gang) zu betätigen. Bei diesem Lösungsansatz ist es möglich, bei Gangwechseln in den unteren Gängen zwischen dem Auslegen des Quellganges und dem Einlegen des Zielganges ein Füllmoment über die zweite Kupplung und den höchsten Gang auf die Abtriebsräder zu legen.

Bei den automatisierten Schaltgetrieben mit nur einer Anfahrund Trennkupplung lassen sich ferner die Schaltabläufe optimieren, mit dem Ziel, die Schaltzeit und damit die Zeitdauer der Zugkraftunterbrechung zu verkürzen.

Ein weiterer besonders vielversprechender Ansatz besteht darin, die einzelnen Schaltkupplungen des automatisierten Schaltgetriebes jeweils teillastfähig auszubilden. Dies ist bspw. offenbart in der DE 199 30 972 C1, die eingangs genannt wurde.

Der dort offenbarte Antriebsstrang basiert auf dem Grundgedanken, während eines Gangwechsels die getriebeeingangsseitige Anfahr- und Trennkupplung nicht oder nicht vollständig zu öffnen. Bei einem Gangwechsel wird die Reibkupplung der Schaltkupplung des Zielganges belastet, um das getriebeeingangsseitig anstehende Moment zu übernehmen. Wenn dies erfolgt ist, kann der Quellgang ausgelegt und schließlich der Formschluss des Zielganges hergestellt werden. In diesem Stand der Technik wird vorgeschlagen, das getriebeeingangsseitig anstehende Drehmoment von der Reibkupplung wenigstens so lange zu halten, bis der Formschluss zwischen Losrad und Welle erreicht ist.

Es versteht sich dabei, dass die Reibkupplung zumindest teillastfähig ausgebildet sein muss, um das anstehende Drehmoment übertragen zu können.

Das Öffnen der Reibkupplung soll erst dann erfolgen, wenn der Formschluss des Zielganges erreicht ist.

Als Schaltkupplung wird bei einer Ausführungsform dieses Standes der Technik ein Aufbau vorgeschlagen, der einer herkömmlichen Sperr-Synchronisierung ähnelt. Allerdings soll der Anspitzwinkel der Verzahnung des Synchronringes untersperrend ausgelegt sein. Um das getriebeeingangsseitig anstehende Moment übernehmen zu können, ist eine Koppeleinrichtung vorgesehen. Die Koppeleinrichtung ist ähnlich aufgebaut wie ein herkömmliches Feder/Kugel/Stein-System, weist jedoch eine erheblich stärkere Federeinrichtung auf (bspw. ein Tellerfederpaket). Hierdurch kann die Reibkupplung der Schaltkupplung mit sehr hohen Momenten belastet werden, ohne dass hierdurch ein Durchschalten und damit Herstellen des Formschlusses erzielt wird.

Nachteilig ist bei dieser Ausführungsform hingegen, dass die Führungsmuffe durch den Einbau der großen und massiven Tellerfedern geschwächt wird. Ferner ist die Montage dieser relativ stark ausgelegten Federpakete nicht einfach zu bewerkstelligen. Weiter ist bei dieser Ausführung keine Volllastübertragung möglich.

Vor diesem Hintergrund besteht das der Erfindung zugrundeliegende Problem darin, eine Schaltkupplung für ein zumindest teillastfähiges automatisiertes Stufengetriebe anzugeben, bei der die Belastung der Reibkupplung während des Einlegens eines Ganges flexibler vorgegeben werden kann.

Diese Aufgabe wird bei der eingangs genannten Schaltkupplung dadurch gelöst, dass eine Anspitzung wenigstens einiger Zähne der Schaltmuffenverzahnung in wenigstens zwei axiale Bereiche unterteilt ist, die unterschiedliche Anspitzwinkel aufweisen, die jeweils größer als Null sind.

Die Schaltkupplung entspricht in ihrem grundsätzlichen Aufbau einer herkömmlichen Sperr-Synchronisierung, die einen Synchronring mit einer übersperrenden Sperr-Verzahnung aufweist. Hierdurch kann verhindert werden, dass ein Formschluss hergestellt wird, bevor die Drehzahlen zwischen Schaltmuffe und Kupplungskörper aneinander angeglichen sind. Nach dem Aufheben der Sperr-Bedingung fädelt die Verzahnung der Schaltmuffe in die Verzahnung des Synchronringes ein, wobei die Reibkupplung entlastet wird. Anschließend muss die Schaltmuffe noch einen gewissen Weg zurücklegen, bis ihre Verzahnung in die Verzahnung des Kupplungskörpers eingreift und den Formschluss des Zielganges herstellt. Bei herkömmlichen handgeschalteten Getrieben stellt dies kein grundsätzliches Problem dar, da getriebeeingangsseitig kein Moment ansteht. Demzufolge bleibt die Drehzahlangleichung zwischen Schaltmuffe und Kupplungskörper auch während dieses Freiflugweges erhalten.

Bei zumindest teillastfähigen automatisierten Stufengetrieben steht hingegen an der Synchronkupplung ein zugkraftunterstützendes Moment an. Hierdurch kann der Kupplungskörper nach dem Aufheben der Sperr-Bedingung und dem Verdrehen des Synchronringes während des Freiflugweges der Schaltmuffe wieder beschleunigen. Somit entsteht zwischen Schaltmuffe und Kupplungskörper wieder eine Differenzdrehzahl, die zu einer starken Geräuschentwicklung beim Einspuren der Schaltmuffe in den Kupplungskörper führen kann.

Bei einem bisherigen Lösungsansatz wird durch eine geeignete Rampengeometrie am Innenumfang der Schaltmuffe und ein starkes Tellerfederpaket auch während des Freiflugweges eine Kraft auf die Reibkupplung ausgeübt, um so den Kupplungskörper im Freiflugweg "festzuhalten" oder zumindest dessen Beschleunigung zu dämpfen.

Die Anspitzung der Verzahnung der Schaltmuffe ist bei dieser Lösung übersperrend ausgelegt, wie bei herkömmlichen Sperr-Sockelsynchronisierungen für Handschaltgetriebe.

Durch die erfindungsgemäße Maßnahme, die Anspitzung wenigstens einiger Zähne der Schaltmuffenverzahnung in zwei axiale Bereiche zu unterteilen, die unterschiedliche Anspitzwinkel aufweisen, kann die Belastung der Reibkupplung während des Einlegens des Zielganges noch flexibler vorgegeben und im Extremfall unter Volllast geschaltet werden.

Unter "zumindest teillastfähig" soll im vorliegenden Zusammenhang verstanden werden, dass zumindest ein Teil des von dem Motor bereitgestellten Drehmomentes während eines Gangwechsels auf die Antriebsräder übertragen werden kann, um die Zugkraftunterbrechung zu mildern bzw. nicht mehr spürbar zu machen. Dieses Moment wird auch als Füllmoment bezeichnet. Bei geeigneter konstruktiver Auslegung und/oder bei schwächeren Motoren kann der Gangwechsel ggf. auch unter Volllast durchgeführt werden.

Somit wird das erfindungsgemäße Problem vollständig gelöst.

Von besonderem Vorteil ist es, wenn der Anspitzwinkel des vorderen Bereiches übersperrend ausgelegt ist.

Hierdurch wird erreicht, dass die Reibkupplung mit einer hohen Aktuatorkraft betätigt werden kann, ohne die Gefahr, vorzeitig den Formschluss herzustellen.

Gemäß einer weiteren bevorzugten Ausführungsform ist der Anspitzwinkel eines hinteren Bereiches untersperrend ausgelegt.

Hierdurch wird erreicht, dass der Synchronring trotz Belastung der Reibkupplung gegenüber der Schaltmuffe verdreht werden kann, um ein Einspuren der Schaltmuffenverzahnung durch den Synchronring durch die Verzahnung des Synchronringes hindurch zu ermöglichen. Je nach zu übertragendem "Füllmoment" kann der Winkel im hinteren Bereich knapp unter der "Sperrbedingung" gewählt werden.

Dabei ist es von besonderem Vorteil, wenn der hintere Bereich so angeordnet ist, dass zumindest während eines Abschnittes des Freiflugweges die Sperrverzahnung des Synchronringes mit dem hinteren Bereich in Eingriff steht.

Diese Maßnahme ermöglicht, dass die Reibkupplung während des Freiflugweges auch mittels des Aktuators belastet wird. Dies wiederum ermöglicht, dass die Federn des Feder/Kugel/Stein-Systems nicht die gesamte Kraft zum Belasten der Reibkupplung aufbringen müssen und insofern kompakter ausgebildet werden können. Demzufolge kann auch die Schaltkupplung insgesamt kompakter ausgeführt werden.

Gemäß einer weiteren bevorzugten Ausführungsform ist die Unterteilung der Anspitzung in einen vorderen und einen hinteren Bereich an den Zahnflanken vorgesehen, die bei einem Hochschaltvorgang in Eingriff kommen.

Bei Hochschaltvorgängen ist es besonders wichtig, dass eine möglichst hohe Zugkraftunterstützung bereitgestellt wird. Bei Herunterschaltvorgängen ist dies hingegen nicht von so großer Bedeutung. Demzufolge ist es möglich, die axial unterschiedliche Anspitzung nur an den wichtigen Zahnflanken vorzusehen, um die Schaltmuffe kostengünstig produzieren zu können.

Insgesamt ist es möglich, als Feder/Kugel/Stein-System ein System einer herkömmlichen Sperr-Synchronisierung für Handschaltgetriebe heranzuziehen. Insofern ergibt sich ein hohes Kosteneinsparungspotential.

Durch die geringere Federkraft wird die Montage vereinfacht. Auf Grund der kompakteren Federn ergibt sich eine geringere Schwächung der Führungsmuffe. Weiter ist es dadurch auch möglich, unter Volllast zu schalten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines automatisierten Antriebsstranges für ein Kraftfahrzeug einschließlich eines automatisierten Stufengetriebes;
- Fig. 2: eine Detailschnittansicht einer herkömmlichen Schaltkupplung;
- Fig. 3: eine schematische Detailansicht der Verzahnungen der Schaltkupplung der Fig. 2;
- Fig. 4: eine der Fig. 3 entsprechende Darstellung der Verzahnungen einer erfindungsgemäßen Schaltmuffe;
- Fig. 5: eine der Fig. 2 entsprechende Darstellung einer Schaltkupplung gemäß der vorliegenden Erfindung;
- Fig. 6: ein Diagramm der Beziehung von Reibmoment und Anspitzwinkel β; und
- Fig. 7: ein Diagramm der Beziehung von Schaltkraft und Anspitzwinkel β.

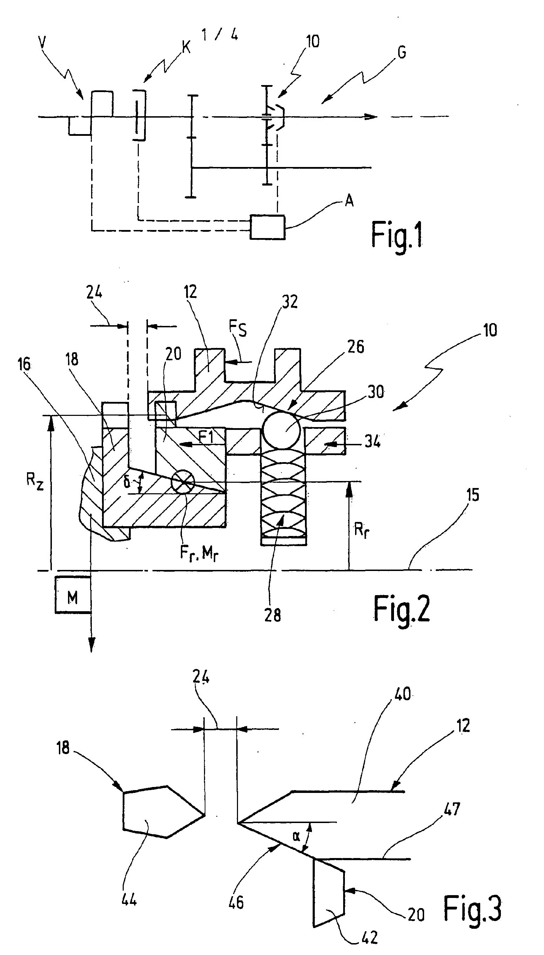

In Fig. 1 ist in stark vereinfachter schematischer Form ein automatisierter Antriebsstrang für ein Kraftfahrzeug dargestellt.

Der Antriebsstrang weist einen Verbrennungsmotor V auf. Der Abtrieb des Verbrennungsmotors ist mit dem Eingang einer Anfahr- und Trennkupplung K verbunden. Der Ausgang der Anfahrund Trennkupplung K ist mit dem Eingang eines Stufengetriebes G verbunden. Das Stufengetriebe G ist als Stirnradgetriebe in Vorgelegebauweise ausgeführt. Radsätze mit jeweils einem Festund einem Losrad sind jeweiligen Gängen des Getriebes G zugeordnet. Das Ein- und Auslegen der Gänge erfolgt durch Verbinden einer Welle mit einem jeweiligen Losrad. Hierzu dient eine Schaltkupplung, wie sie in Fig. 1 generell mit 10 bezeichnet ist.

Der Antriebsstrang ist automatisiert, wie es schematisch bei A gezeigt ist. Eine übergeordnete Steuerung überwacht und regelt die Parameter des Verbrennungsmotors V, der Kupplung K und des Getriebes G und steuert diese mittels geeigneter Aktuatoren in einer aufeinander abgestimmten Art und Weise an.

Das Getriebe G ist zumindest teillastschaltfähig ausgebildet, indem die Schaltkupplungen 10 (von denen in Fig. 1 nur eine dargestellt ist) jeweils zumindest teillastschaltfähig ausgebildet sind. Hierdurch sind Gangwechsel möglich, bei denen die Kupplung K nicht oder nicht vollständig geöffnet wird und ein somit von dem Verbrennungsmotor V am Eingang des Getriebes G anstehendes Drehmoment von einer Reibkupplung der Schaltkupplung 10 des Zielganges übernommen werden kann.

Es versteht sich, dass die Schaltkupplungen 10 Drehmomente nur bis zu einer gewissen Grenze übertragen können. Dies kann durch geeignete Ansteuerung des Verbrennungsmotors V (Verringerung des abgegebenen Drehmomentes durch Beeinflussen der Drosselklappe, um ein Beispiel zu nennen) und der Kupplung K (teilweises Öffnen) gewährleistet werden. Je nach konstruktiver Auslegung und Motormoment kann auch das volle Moment übertragen werden.

Fig. 2 zeigt eine schematische Detailansicht einer herkömmlichen Schaltkupplung für ein automatisiertes Stufengetriebe G im Axialschnitt.

Die Schaltkupplung 10 weist in an sich herkömmlicher Weise eine Schaltmuffe 12 auf, die an einer nicht näher bezeichneten Führungsmuffe axial verschieblich, aber drehfest hiermit verbunden ist. Anstelle der Führungsmuffe 14 kann die Schaltmuffe 12 auch unmittelbar an einer Welle des Getriebes verschieblich gelagert sein.

Ein Losrad 16 ist drehbar um eine Drehachse 15 der Welle gelagert. An dem Losrad 16 ist ein Kupplungskörper 18 starr festgelegt.

Zwischen der Führungsmuffe 14 und dem Kupplungskörper 18 ist ein Synchronring 20 angeordnet.

In ebenfalls an sich herkömmlicher Weise beinhaltet die Schaltkupplung 10 eine Reibkupplung 22, die als Konuskupplung mit einem Konuswinkel δ ausgebildet ist. Konische Reibflächen der Reibkupplung 22 sind zum einen vorgesehen an dem Kupplungskörper 18, zum anderen an dem Synchronring 20.

Ferner ist in Fig. 2 schematisch ein Freiflugweg 24 gezeigt, also ein Weg, den die Schaltmuffe 12 nach dem Aufheben einer Sperr-Bedingung und Durchspuren des Synchronringes 20 zurücklegen muss, bevor die Schaltmuffe 12 in den Kupplungskörper 18 einfädelt, um den Formschluss zwischen Welle und Losrad 16 herzustellen.

Bei 26 ist eine Koppeleinrichtung gezeigt, die ein an der Führungsmuffe 14 gelagertes Federpaket 28 (bzw. eine Mehrzahl derartiger Pakete über den Umfang verteilt) aufweist. Das Federpaket 28 drückt eine Kugel 30 gegen einen Rampenabschnitt 32 am Innenumfang der Schaltmuffe 12.

Das Federpaket 28 und die Kugel 30 sind in einem Mitnehmerstein 34 gelagert, der begrenzt axial beweglich gegenüber der nicht dargestellten Führungsmuffe 14 gelagert ist. Der Mitnehmerstein 34 ist so gelagert, dass er auf den Synchronring 20 eine Axialkraft F1 ausüben kann. Fₛ zeigt die erforderliche Schaltkraft.

Der Radius R_{z} zeigt den Radius Mitte Zahn der Verzahnungen von Schaltmuffe 12, Synchronring 20 und Kupplungskörper 18.

Der Radius Rᵣ zeigt den Reibradius der Reibkupplung 22. Eine senkrecht zur Zeichnungsebene der Fig. 2 ausgerichtete Reibkraft ist bei Fᵣ gezeigt.

Fig. 3 zeigt in schematischer Darstellung die Verzahnung 40 der Schaltmuffe 12, die Verzahnung 42 des Synchronringes 20 sowie die Verzahnung 44 des Kupplungskörpers 18.

Die Verzahnung 40 der Schaltmuffe 12 in an ihrem vorderen Ende mit einer Anspitzung versehen, die übersperrend ausgelegt ist (Sperrwinkel α). Die Auslegung des Sperrwinkels α erfolgt nach der Grundauslegung einer handelsüblichen Synchronisierung für Handschaltgetriebe.

Im vorliegenden Zusammenhang sind jene Zahnflanken der Verzahnungen 40, 42, 44 von Bedeutung, die bei einer Zughochschaltung in Eingriff gelangen. Bei Zughochschaltungen ist es von besonderer Wichtigkeit, über die Momentenübernahme eine Zugkraftunterstützung bereitzustellen.

Die Funktionsweise der herkömmlichen Schaltkupplung 10 lässt sich wie folgt erklären. Bei einem Gangwechsel wird die Schaltkupplung 10 des Zielganges vor dem Auslegen des Quellganges belastet, um das getriebeeingangsseitig anstehende Moment zu übernehmen. Hierbei wird die Schaltmuffe 12 mittels eines Aktuators gegen die Kraft des Federpaketes 28 betätigt. Die Anspitzung 46 der Verzahnung 40 der Schaltmuffe 12 kommt in Anlage an die Verzahnung 42 des Synchronringes 20. Auf Grund der Differenzdrehzahlen zwischen Welle und Losrad 16 gelangt der Synchronring 20 in seine Sperrstellung. Durch weitere Belastung der Schaltmuffe 12 drückt diese den Synchronring 20 gegen den Kupplungskörper 18, so dass eine entsprechende Reibkraft Fᵣ erzeugt wird. Die Reibkraft Fᵣ erzeugt ein in Fig. 2 schematisch angedeutetes Zugkraftmoment M. Dieses Zugkraftmoment M wird auf die Antriebsräder übertragen.

Sobald sich die Drehzahlen von Welle und Kupplungskörper 18 aneinander angenähert haben, wird die Sperr-Bedingung des Synchronringes 20 aufgehoben und die Verzahnung 40 spurt in die Verzahnung 42 des Synchronringes ein.

Ab diesem Zeitpunkt (der in Fig. 3 dargestellt ist) kann von dem Aktuator keine Kraft mehr auf die Reibkupplung 22 ausgeübt werden. Denn die Verzahnung 40 ist hinter der Anspitzung 46 gerade ausgebildet (siehe 47). Bei einer herkömmlichen Sperr-Synchronisierung würde der Kupplungskörper 18 auf Grund des getriebeeingangsseitig anstehenden Momentes während des Freiflugweges 24 wieder hoch beschleunigen. Dies wird verhindert bzw. gedämpft durch das Tellerfederpaket 28, das über die Kugel 30 und den Rampenabschnitt 32 am Innenumfang der Schaltmuffe 12 eine Kraft F₁ (vergleiche Fig. 2) auf den Synchronring 20 ausübt und demzufolge die Reibkupplung 22 entsprechend belastet.

Es versteht sich, dass auf Grund der nicht unerheblichen eingangsseitigen Momente das Federpaket 28 eine hohe Federrate aufweisen muss, um eine nicht unerhebliche Kraft F₁ über den Mitnehmerstein 34 auf den Synchronring 20 ausüben zu können.

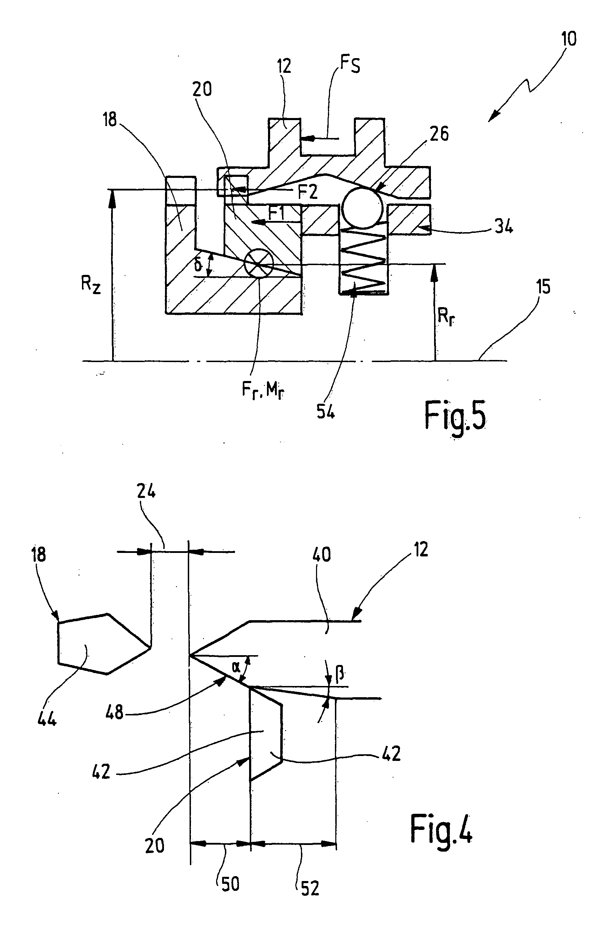

Die Figuren 4 und 5 zeigen eine Schaltkupplung 10 gemäß der vorliegenden Erfindung.

Der grundsätzliche Aufbau und die grundsätzliche Betriebsweise der Schaltkupplung 10 der Figuren 4 und 5 entsprechen jener der herkömmlichen Schaltkupplung der Figuren 2 und 3.

Im Vorliegenden wird deshalb nur auf die Unterschiede eingegangen.

Bei der Schaltkupplung 10 der Figuren 4 und 5 ist die Anspitzung 48 der Verzahnung 40 der Schaltmuffe 12 in einen vorderen axialen Bereich 50 und einen hinteren axialen Bereich 52 unterteilt.

Der vordere axiale Bereich 50 weist einen Anspitzwinkel α auf, der übersperrend ausgelegt ist. Der Anspitzwinkel β des hinteren axialen Bereiches 52 ist hingegen untersperrend ausgebildet.

Ferner ist die Anordnung der axialen Bereiche 50, 52 derart, dass die Verzahnung 42 des Synchronringes 20 während des Freiflugweges 24 mit dem hinteren axialen Bereich 52 in Eingriff steht.

Hierdurch wird erreicht, dass während des Freiflugweges 24 nicht nur eine Kraft F₁ über die Koppeleinrichtung 26 auf den Synchronring 20 ausgeübt wird, um ein Wiederbeschleunigen des Kupplungskörpers 18 zu verhindern. Durch den Eingriff der Verzahnungen 40, 42 in dem hinteren axialen Bereich 52 wird der Synchronring 20 zusätzlich zur Federkraft F₁ mit einer weiteren Kraft F₂ gegen den Kupplungskörper 18 gedrückt. Dabei ist wegen der untersperrenden Auslegung des Ringes β die Sperr-Bedingung nicht erfüllt, so dass der Kupplungskörper 18 auch entgegen des Synchronringes 20 verdreht werden kann (sogenannter Doppeleingriff beim Einspuren).

Bei einem Handschaltgetriebe wäre dieser Effekt als sehr starker zweiter Druckpunkt zu spüren (untersperrter Doppeleingriff).

Bei einem automatisierten Schaltgetriebe ist dieser Effekt jedoch nicht problematisch, da die Kraft zum Durchschalten von einem geeignet ausgelegten Aktuator aufgebracht werden kann.

Auf Grund der Tatsache, dass während des Freiflugweges 24 die Reibkupplung 22 nicht nur mit einer Kraft F₁, sondern auch mit einer Kraft F₂ belastet wird, kann die Kraft F₁ kleiner ausfallen. Demzufolge können die Federpakete 28 durch Federpakete 54 einer geringeren Federrate (bspw. in Form einer einfachen Spiralfeder) ersetzt werden.

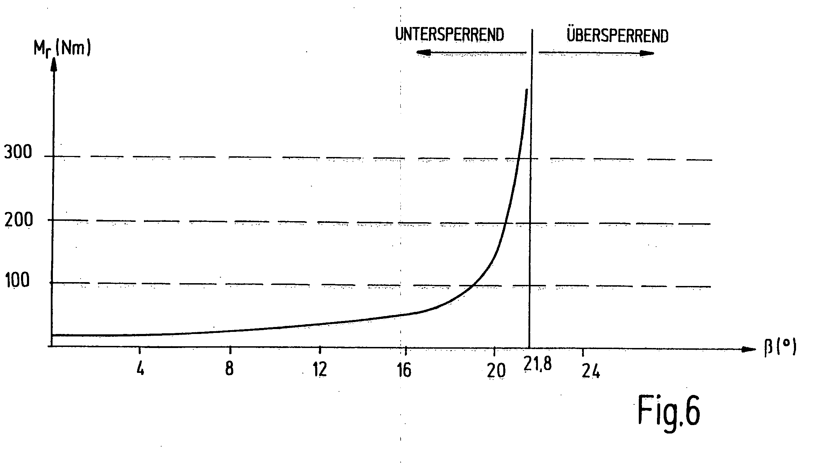

Fig. 6 ist ein Diagramm des Reibmomentes Mr über dem Anspitzwinkel β des hinteren axialen Bereiches 52.

In Fig. 6 ist bei einem Wert von 21,8° ein Sperrwinkel dargestellt. Dieser Wert ist beispielhaft zu verstehen. Der Sperrwinkel ergibt sich unter anderem von folgenden Parametern: Konuswinkel der Schaltkupplung, Reibwert, Anzahl der Reibkegel, Reibradius, und Verzahnungsdurchmesser.

Man erkennt, dass das Reibmoment von einem Wert > 0 ausgeht, der sich bei einem Anspitzwinkel β von 0° durch das Feder/Kugel/Stein-System ergibt. Hiervon ausgehend steigt das Reibmoment zunächst annähernd linear und schließlich asymptotisch nach oben gegen den Sperrwinkel an.

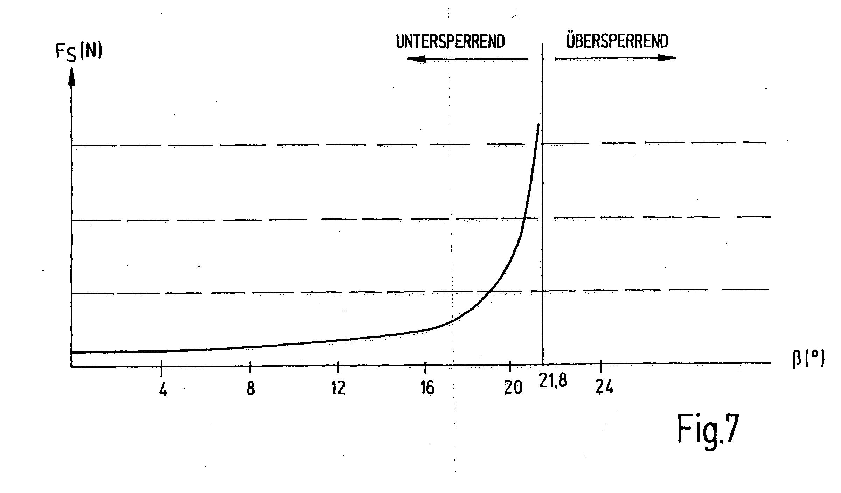

In Fig. 7 ist die Schaltkraft Sₛ über dem Sperrwinkel β des hinteren axialen Bereiches 52 dargestellt. Der Verlauf der Schaltkraft ist ähnlich dem Verlauf des Reibmomentes.

Aus diesen Diagrammen ergibt sich, dass ein besonders bevorzugter Wert für den Anspitzwinkel β im Bereich von 12 bis 21° liegt, besonders bevorzugt im Bereich von 16 bis 20°, bei einem Sperrwinkel von 21,8; generell sollte der Winkel β so nahe wie möglich am jeweiligen Sperrwinkel liegen. Bei darüber liegenden Werten des Anspitzwinkels β werden die erforderlichen Schaltkräfte zu hoch, selbst bei Verwendung von hydraulischen Aktuatoren. Bei kleineren Winkeln sinken die selbstsperrenden Kräfte ab.

Für drehmomentstarke Motoren, die entsprechend große Reibmomente benötigen, sollte der Wert von β entsprechend auch in einem höheren Bereich gewählt werden. Insgesamt kann man die Wahl des Anspitzwinkels β dem vorgegebenen Motormoment konstruktiv anpassen und dementsprechend die Aktuatorik konstruktiv genau auslegen. Hierdurch ist eine Optimierung der Bauteile der Getriebesteuerung möglich.

Durch die Wahl des Anspitzwinkels β im Rahmen der Getriebekonstruktion kann außerdem die Möglichkeit von Teillast- bis Volllast-Schaltfähigkeit geschaffen werden.

An der dargestellten Ausführungsform können für den Fachmann ersichtlich diverse Abwandlungen vorgenommen werden.

So können mehr als zwei axiale Bereiche 50, 52 vorgesehen sein. Die beschriebene Anspitzung kann sowohl an den Zahnflanken vorgesehen sein, die bei Hochschaltungen in Eingriff kommen, als auch bei den Flanken, die bei einem Schaltvorgang unter Schub in Eingriff gelangen.

Die Verzahnung 42 des Synchronringes ist als Blocksperrzahn ausgebildet, der weiter als der Fußkreis in die Schaltmuffe eintaucht. Ansonsten könnte eine Hinterlegung stören.

## Patentansprüche

1. Schaltkupplung (10) für ein automatisiertes Stufengetriebe (G), mit dem sich Gangwechsel zumindest unter Teillast durchführen lassen, wobei die Schaltkupplung (10) generell als Sperr-Synchronisierung (10) mit einer Schaltmuffe (12), einem Kupplungskörper (18), einem Synchronring (20) und einer Reibkupplung (22) ausgebildet und dazu ausgelegt ist, die Reibkupplung (22) zumindest während eines Abschnittes eines Freiflugweges (24) der Sperr-Synchronisierung (10) zu belasten, um ein Moment übertragen und folglich einen Gang zumindest unter Teillast einlegen zu können,
**dadurch gekennzeichnet, dass**
eine Anspitzung (48) wenigstens einiger Zähne der Schaltmuffenverzahnung (40) in wenigstens zwei axiale Bereiche (50, 52) unterteilt ist, die unterschiedliche Anspitzwinkel (α, β) aufweisen, die jeweils größer als Null sind.

2. Schaltkupplung nach Anspruch 1, **dadurch gekennzeichnet, dass** der Anspitzwinkel (α) des vorderen Bereiches (50) übersperrend ausgelegt ist.

3. Schaltkupplung nach Anspruch 1 oder 2, **dadurch gekennzeichnet, dass** der Anspitzwinkel (β) eines hinteren Bereiches (52) untersperrend ausgelegt ist.

4. Schaltkupplung nach Anspruch 3, **dadurch gekennzeichnet, dass** der hintere Bereich (52) so angeordnet ist, dass zumindest während eines Abschnittes des Freiflugweges (24) die Sperrverzahnung (42) des Synchronringes (20) mit dem hinteren Bereich (52) in Eingriff steht.

5. Schaltkupplung nach einem der Ansprüche 1 bis 4, **dadurch gekennzeichnet, dass** die Unterteilung der Anspitzung (48) in einen vorderen und einen hinteren Bereich (50, 52) an den Zahnflanken vorgesehen ist, die bei einem Hochschaltvorgang in Eingriff gelangen.
